# EUROPÄISCHE PATENTANMELDUNG

(11) **EP 2 495 455 A2**
(43) Veröffentlichungstag der Anmeldung: **05.09.2012**
(21) Anmeldenummer: 12401025.7
(22) Anmeldetag: 21.02.2012
(51) Int. Cl.: F16B 13/06

(54) **Befestigungselement**

(30) Priorität: 01.03.2011 DE 102011000986; 12.07.2011 DE 102011051766
(71) Anmelder: fischerwerke GmbH & Co. KG, 72178 Waldachtal (DE)
(72) Erfinder: Burkhardt, Frank, 72250 Freudenstadt (DE); Linka, Martin, 72160 Horb a.N. (DE); Schäuffele, Jürgen, 72290 Lossburg/Wittendorf (DE)

(57) **Zusammenfassung**

Die Erfindung betrifft ein Befestigungselement (1) mit einem Spreizelement (3) aus gummiartigem Material, das zwischen einem ersten Widerlager (2) und einem zweiten Widerlager (4) gelagert ist. Das erste Widerlager (2) ist in Längsrichtung (A) einbringseitig vor dem zweiten Widerlager (4) angeordnet und das Spreizelement (3) ist durch eine Relativbewegung der beiden Widerlager (2, 4) derart stauchbar, dass das Spreizelement (3) in Querrichtung gedehnt werden kann und das Befestigungselement (1) hierdurch in einem Bohrloch befestigbar ist. Um das Spreizverhalten des Befestigungselements (1) gegenüber den aus dem Stand der Technik bekannten Befestigungselementen zu verbessern, schlägt die Erfindung vor, dass mindestens ein Widerlager (2, 4) eine konische Widerlagerfläche (11, 12) für das Spreizelement (1) aufweist, deren radiale Ausdehnung zum Spreizelement (3) hin größer wird und die sich im Wesentlichen bis zu einem spreizteilseitigen Ende (13, 14) des Widerlagers (2, 4) erstreckt.

## Beschreibung

Die Erfindung betrifft ein Befestigungselement mit den Merkmalen des Oberbegriffs des Anspruchs 1.

Ein derartiges Befestigungselement ist beispielsweise aus der europäischen Patentanmeldung EP 0 161 916 A2 bekannt. Das Befestigungselement ist zur Montage von Anbauteilen an Bauwerkskörpern geeignet, die aus Hohlbaustoffen oder Vollbaustoffen bestehen, die einen Verankerungsgrund bilden. Das Befestigungselement weist ein Spreizelement auf, das zwischen zwei Widerlagern gelagert ist. Die beiden Widerlager sind durch eine Schraube verbunden, die in ein Innengewinde des vorderen Widerlagers eingreift, so dass die beiden Widerlager gegeneinander bewegt werden können, so dass das Spreizelement gestaucht werden kann. Das Spreizelement ist aus einem gummiartigen Material, das durch eine Stauchung so in Querrichtung dehnbar ist, dass sich der Durchmessers des Spreizelements deutlich vergrößert. Das Spreizelement ist im Wesentlichen zylinderförmig, mit zwei Endabschnitten, die je eine umlaufende, radiale Nut aufweisen. In die Nuten können korrespondierende Federn der Widerlager eingreifen, wodurch das Spreizelement mit den Widerlagern zu einer Befestigungseinheit vormontiert werden kann. Zum Stauchen der Spreizhülse wird an der Schraube gedreht, so dass die beiden Widerlager aufeinander zu bewegt werden. Die Widerlager drücken mit ihren einander entgegengerichteten Enden in axialer Richtung auf das Spreizelement, das in axialer Richtung gestaucht wird. Die Krafteinleitung erfolgt über die in radialer Richtung verlaufenden Flächen der Federn, die am Widerlager angeordnet sind, also im Wesentlichen in axialer Richtung. Die Querdehnung erfolgt senkrecht hierzu in radialer Richtung, wobei die Verformung der Spreizhülse in Querrichtung undefiniert und nicht immer in gleicher Form reproduzierbar ist. Durch die Stauchung und Querdehnung des Spreizelements lässt sich das Befestigungselement in einem Bohrloch verankern, da das in seinem Umfang vergrößerte Spreizelement gegen die Wand eines Bohrlochs gedrückt wird oder eine Wand eines Hohlbaustoffs hintergreift.

Aufgabe der Erfindung ist es, ein Befestigungselement vorzuschlagen, das ein gegenüber dem Stand der Technik verbessertes Spreizverhalten aufweist.

Diese Aufgabe wird erfindungsgemäß durch ein Befestigungselement mit den Merkmalen des Anspruchs 1 gelöst. Das erfindungsgemäße Befestigungselement weist ein Spreizelement aus einem gummiartigen Material auf, das zwischen einem ersten und einem zweiten Widerlager gelagert ist. Das erste Widerlager ist in Längsrichtung vor dem zweiten Widerlager angeordnet, wobei "vor" sich auf die Seite des Befestigungselements bezieht, die beim Einbringen des Befestigungselements in ein Bohrloch vorne ist. Das Spreizelement ist durch eine Relativbewegung der beiden Widerlager derart stauchbar, dass das Spreizelement in Querrichtung gedehnt ist, wodurch das Befestigungselement in einem Bohrloch befestigt werden kann. Die beiden Widerlager und das Spreizelement bilden gemeinsam eine Spreizvorrichtung, über die die zum Stauchen notwendige axiale Druckkraft auf das Spreizelement ausgeübt wid. Erfindungsgemäß weist mindestens eines der Widerlager eine konische Widerlagerfläche für das Spreizelement auf. Die radiale Ausdehnung der Widerlagerfläche wird erfindungsgemäß zum Spreizelement hin größer und sie erstreckt sich im Wesentlichen bis zu einem spreizteilseitigen Ende des Widerlagers, also im Wesentlichen bis zu dem Ende des Widerlagers, das dem Spreizelement zugewandt ist. Die konische Widerlagerfläche kann hierbei insbesondere kegel- oder kegelstumpfförmig oder aber sphärisch gekrümmt ausgeführt sein. Die Kraftübertragung vom Widerlager auf das Spreizelement erfolgt somit nicht über eine radiale Ebene. Die beim Stauchen vom Widerlager auf das Spreizelement übertragenen Druckkräfte wirken daher nicht parallel zur Längsachse des Befestigungselements, sondern sie wirken normal zu der gegenüber der Längsachse geneigten Widerlagerfläche. Der beim Stauchen zur Querdehnung führende Kraftfluss im Spreizelement ist aufgrund der konischen Ausbildung der Widerlagerfläche so, dass das Spreizelement sich reproduzierbar ringförmig beziehungsweise birnenförmig dehnt. Mit "Stauchen" ist hier der Vorgang der Verformung des Spreizelements gemeint. Über die Ausbildung der konischen Widerlagerfläche kann die Verformung gesteuert werden, so dass das Spreizverhalten auf den jeweiligen Anwendungsfall abgestimmt werden kann.

Das Widerlager ist im Verhältnis zum Spreizelement relativ steif, so dass es beim Stauchen des Spreizelements im Wesentlichen nicht verformt wird. Das Widerlager besteht beispielsweise aus Stahl oder einem relativ harten Kunststoff, beispielsweise einem faserverstärkten Polyamid. Das gummiartige Material des Spreizelements dagegen ist relativ leicht durch Stauchen verformbar. Es besteht in Wesentlichen aus einem Gummi oder einem Kunststoff mit einer relativ hohen Bruchdehnung von beispielsweise mindestens 50 %. Insbesondere ist das Spreizelement aus einem Polyurethanelastomer hergestellt, beispielsweise aus dem unter dem Markennamen "Elastollan" bekannten PU-Elastomer der Firma BASF. Alternativ kann beispielsweise der unter dem Handelsnamen Vulkollan bekannte Polyester-Urethan-Kautschuk verwendet werden. Mit diesen Materialien ist eine relativ große Querdehnung, d.h. eine starke Vergrößerung des Durchmessers des Spreizelements beim Stauchen erreichbar.

Durch die erfindungsgemäße Ausbildung der konischen Widerlagerfläche des Widerlagers kann die Form des gestauchten Spreizelements, also des Spreizelements im verspreizten Zustand, so beeinflusst werden, dass die Verformung für den jeweiligen Anwendungsfall optimiert ist. Das erfindungsgemäße Befestigungselement kann beispielsweise in einem Vollbaustoff verwendet werden, in dem aufgrund der speziellen Ausgestaltung der Spreizvorrichtung ein großer Anpressdruck und somit eine große Reibungskraft zwischen Bohrlochwand und Spreizelement erzeugt werden kann. Alternativ kann die Spreizvorrichtung des erfindungsgemäßen Befestigungselements derart gestaltet sein, dass sie in einem weichen Baustoff, wie beispielsweise Porenbeton, einen birnenförmigen Hinterschnitt erzeugt. Ein anderes Einsatzgebiet des erfindungsgemäßen Befestigungselements sind Hohlbaustoffe, wie Hochlochziegel, Gipskartonwände oder Hohlprofile von Türen und Fenstern, in denen das Befestigungselement aufgrund einer relativ weiten radialen und ringförmigen Aufspreizung des Spreizelements Wände und/oder Stege des Verankerungsgrunds flächig hintergreifen kann. Insbesondere bei der Verwendung des erfindungsgemäßen Befestigungselements in Hohlprofilen von Türen und Fenstern, die innenliegend kleinere Stege zur Stabilisierung aufweisen, ist von Vorteil, dass das Spreizelement aus gummiartigem Material besteht und elastisch verformbar ist. Das Spreizelement kann in diesem Fall direkt gegen die Wand des Hohlprofils gedrückt werden. Dabei werden die Stege und Unebenheiten ausgeglichen und umschlossen, ohne dass hierdurch die Haltekräfte beeinträchtigt werden.

Bei einer bevorzugten Ausgestaltungsform des erfindungsgemäßen Befestigungselements erstreckt sich die konische Widerlagerfläche im Wesentlichen bis zum Umfang des Widerlagers. Das Widerlager ist in diesem Fall auf einer möglichst großen Fläche mit dem Spreizelement in Kontakt, so dass beim Stauchen die Druckkräfte nicht lokal, sondern flächig über die Widerlagerfläche in das Spreizelement eingetragen werden. Durch den flächigen Eintrag der Druckkräfte kann besonders gut gesteuert werden, wie sich das Spreizelement beim Stauchen verformt.

Weiterhin ist bevorzugt, dass an mindestens einem Ende des Spreizelements eine konische Lagerfläche angeordnet ist. Vorzugsweise korrespondiert die Lagerfläche mit der Widerlagerfläche des Widerlagers. Insbesondere korrespondieren die Lagerfläche und die Widerlagerfläche derart, dass die Lagerfläche vollflächig an der Widerlagerfläche anliegt. Die Lagerfläche bildet in diesem Fall eine Negativform der Widerlagerfläche. Hierdurch ist eine flächige Einleitung der Druckkräfte gewährleistet, wodurch die Verformung des Spreizelements beim Stauchen reproduzierbar gesteuert werden kann.

Bei einer weiteren bevorzugten Ausgestaltungsform des erfindungsgemäßen Befestigungselements ist die Lagerfläche kegel- oder kegelstumpfförmig, mit einem Öffnungswinkel des Kegels von 40° bis 70°, insbesondere von 60°. Bei dieser Ausgestaltungsform wird das Spreizelement besonders gut ringförmig gedehnt, d.h., es wird eine relativ große Vergrößerung des Durchmessers des Spreizelements erreicht, wobei das Spreizelement im verspreizten Zustand so stabil ist, dass auch große Kräfte vom Spreizelement in den Verankerungsgrund übertragen werden können.

Weiterhin ist bevorzugt, dass das Spreizelement einen im Wesentlichen zylinderförmigen Stauchkörper aufweist. "Zylinderförmig" meint hier, dass die grundlegende Form des Stauchkörpers im unverspreizten Zustand zylindrisch ist, wobei die Mantelfläche des Stauchkörpers nicht zwingend eben sein muss. Sie kann Unebenheiten aufweisen, beispielsweise Rauheitselemente, die über die Mantelfläche überstehen, um die Reibung zwischen Spreizelement und Bohrlochwand zu vergrößern. Zudem muss der Stauchkörper nicht unbedingt einen kreisrunden Querschnitt aufweisen. Ebenso ist ein polygonaler Querschnitt möglich oder ein Stauchkörper mit kreisrundem Querschnitt, an dem nach außen abstehende Rippen, insbesondere Längsrippen zur Verdrehsicherung, angeordnet sind.

Bei einer weiteren bevorzugten Ausgestaltungsform des erfindungsgemäßen Befestigungselements beträgt das Verhältnis der axialen Länge des Stauchkörpers zum Durchmesser des Stauchkörpers im unverspreizten Zustand im Wesentlichen 0,75 bis 1,5, insbesondere 1,0 bis 1,25. Bei einem nicht-kreisrunden Querschnitt des Stauchkörpers ist unter "Durchmesser" der Durchmesser eines den Stauchkörper umschreibenden geraden Zylinders zu verstehen, wobei die Längsachse des Befestigungselements normal zur Grund- und Deckfläche des Zylinders verläuft. Ein derartiger Stauchkörper weist ein ausgewogenes Verhältnis von Aufspreizbarkeit zu Stabilität im aufgespreizten Zustand auf.

Weiterhin ist bevorzugt, dass die beim Stauchen des Spreizelements an der Lagerfläche anliegende Widerlagerfläche des einen Widerlagers kegel- oder kegelstumpfförmig ist. Der Öffnungswinkel des Kegels beträgt 40° bis 70°, vorzugsweise 55° bis 65°, insbesondere 60°. Mit dem als Kegelfläche mit dem angegebenen Öffnungswinkel ausgebildeten Widerlager wird das Spreizelement besonders gut ringförmig gedehnt, so dass eine relativ starke Vergrößerung des Durchmessers des Spreizelements erreichbar ist.

Bei einer weiteren bevorzugten Ausführungsform des erfindungsgemäßen Befestigungselements weist das mindestens eine Widerlager mindestens zwei Schlitze auf, die den die Widerlagerfläche bildenden, vorzugsweise konischen Teil des mindestens einen Widerlagers in Spreizsegmente unterteilt, die eine Aufspreizung der Widerlagerfläche ermöglichen. Die Spreizsegmente können beim Stauchen des Spreizelements durch die axial wirkende Druckkraft in radialer Richtung verspreizt werden. Die aufgespreizten Spreizsegmente stützen das gestauchte und radial erweiterte Spreizelement ab, so dass vom Spreizelement größere Kräfte aufgenommen werden können, bevor es versagt. Die Spreizsegmente können im aufgespreizten Zustand auch direkt mit dem Baustoff in Kontakt treten. Beispielsweise können die Spreizsegmente das Befestigungselement in einem Hohlbaustoff zusätzlich zum Spreizelement an einer Wand oder einem Steg des Hohlbaustoffs abstützen. Insbesondere weist das erste Widerlager drei oder vier Schlitze auf. Die Verwendung von drei oder vier Schlitzen führt zu einem ausgewogenen Verhältnis von Stabilität und Aufspreizbarkeit der Spreizsegmente.

Weiterhin ist bevorzugt, dass das mindestens eine Widerlager derart gestaltet ist, dass die Widerlagerfläche aufspreizt, bevor sich das Spreizelement beim Stauchen verformt. Das Aufspreizen erfolgt zumindest teilweise vor dem Stauchen des Stauchkörpers, wobei die vollständige Aufspreizung auch noch während des Stauchens des Spreizelements erfolgen kann. Durch das Aufspreizen der Widerlagerfläche wird erreicht, dass das Spreizelement beim Stauchen möglichst vollflächig an der Widerlagerfläche anliegt. Insbesondere durch die Unterteilung des Widerlagers in Spreizsegmente kann die Widerlagerfläche derart gestaltet werden, das sie vor dem Stauchen aufspreizt. Um das Biegen der Spreizelemente zu erleichtern, kann an den Spreizelementen zudem eine Schwächung vorgesehen sein. Die Schwächung kann beispielsweise durch eine in Umfangsrichtung verlaufende Nut erreicht werden, so dass die Spreizsegmente schon unter einer axialen Druckkraft aufspreizen die geringer ist, als die zum Stauchen des Stauchkörpers notwendige Druckkraft. Durch das Aufspreizen wird erreicht, dass die Widerlagerfläche vor dem Stauchen des Stauchkörpers vergrößert wird. Der Stauchkörper liegt somit auch dann noch zum großen Teil an der Widerlagerfläche an, wenn er in radialer Richtung stark gedehnt ist. Hierdurch stabilisiert die Widerlagerfläche den Stauchkörper, was insbesondere bei einer Verwendung des erfindungsgemäßen Befestigungselements in Hohlbaustoffen zu einer Vergrößerung der zwischen dem Baustoff und dem Befestigungselement übertragbaren Haltekräfte führt.

Um das Aufspreizen der Widerlagerfläche zu begrenzen, kann an dem einen Widerlager eine Begrenzungsvorrichtung angeordnet sein. Die Begrenzungsvorrichtung besteht beispielsweise aus einem Anschlag. Der Anschlag kann an einem oder an mehreren der Spreizelemente ausgebildet sein. Beispielsweise weist das Spreizelement eine ringartige Nut auf, die zum einen die Funktion hat, dass das Spreizelement leicht und an einer definierten Stelle gebogen werden kann. Zudem wird durch die Ausbildung der Nut die Begrenzungsvorrichtung geschaffen, da die Wände der Nut durch das Aufspreizen aufeinander zu bewegt werden und beim Erreichen des gewünschten Öffnungswinkels der Widerlagerfläche aneinander anstehen, so dass das Widerlager nicht weiter aufgespreizt werden kann.

Das mindestens eine Widerlager ist insbesondere das erste Widerlager. Das zweite Widerlager kann ebenfalls wie das erste Widerlager ausgeführt sein. Alternativ ist es möglich, dass das zweite Widerlager das Spreizelement einspannt oder nur Druckkräfte in Längsrichtung auf das Spreizelement überträgt. Zudem können mehrere Spreizvorrichtungen am Befestigungselement angeordnet sein.

Bei einer weiteren bevorzugten Ausführungsform des erfindungsgemäßen Befestigungselements ist an dem Befestigungselement eine Mitdrehsicherung angeordnet. Die Mitdrehsicherung ist beispielsweise als umlaufende Prägung der Oberfläche ausgeführt, die mittels eines Rändels bei der Herstellung eingeprägt wurde. Die Mitdrehsicherung ist derart am Befestigungselement angeordnet, dass sie in den Verankerungsgrund oder das Anbauteil formschlüssig einschneidet. Die Mitdrehsicherung verhindert, dass beim Anziehen einer am Befestigungselement vorhandenen Schraube, die die Relativbewegung der beiden Widerlager bewirkt, das Befestigungselement sich mit der Schraube relativ zum Verankerungsgrund dreht. Vorzugsweise ist die Prägung mit keilförmigen Zähnen ausgeführt, die in Einbringrichtung schräg abfallen.

Vorzugsweise ist an dem mindestens einen Widerlager des erfindungsgemäßen Befestigungselements ein Verdrehsicherungselement angeordnet ist, das eine Verdrehung des Spreizelements relativ zu dem mindestens einen Widerlager verhindert. Das Verdrehsicherungelement ist beispielsweise eine zahnförmige Erhebung auf der Widerlagerfläche, die bei der Herstellung des Widerlagers durch das Eindringen eines Stempels in das Widerlager erzeugt wird. Alternativ kann das Verdrehsicherungelement beim Herstellen des Widerlagers als längliche Rippe ausgebildet werden. Ist beispielsweise am Befestigungselement eine Schraube angeordnet, die die Relativbewegung der beiden Widerlager bewirkt, und das erste Widerlager gegen das zweite Widerlager verschiebt, so verhindert das Verdrehsicherungelement, dass das erste Widerlager mit der Schraube mitdreht und somit nicht relativ zum zweiten Widerlager bewegt werden kann. Der Zahn oder die Rippe kann beispielsweise spitz, stumpf oder als langgestreckt mit dreiecksförmigem Querschnitt ausgeführt sein. Auch können mehr als ein Zahn oder eine Rippe an der Widerlagerfläche angeordnet sein. Insbesondere sind zwei bis vier Zähne oder Rippen vorgesehen, die eine Verdrehung wirksam verhindern, indem sie in das relativ weiche gummiartige Material des Spreizelements einschneiden. Alternativ weist das Widerlager einen Schlitz auf, in den das gummiartige Material des Spreizelements eindringen kann, wenn das Spreizelement gestaucht und in radialer Richtung gedehnt wird. Der Schlitz wirkt als Verdrehsicherungselement, da durch das Eindringen des Materials des Spreizelements eine Verdrehung des Spreizelements gegenüber dem Widerlager durch Formschluss verhindert wird.

Die Erfindung wird nachfolgend anhand der in der Zeichnung dargestellten Ausführungsbeispiele näher erläutert.

Es zeigen:
- Figur 1: ein erstes erfindungsgemäßes Befestigungselement in einem unverspreizten Zustand in einer perspektivischen Ansicht;
- Figur 2: das erste erfindungsgemäße Befestigungselement im unverspreizten Zustand in einem Axialschnitt;
- Figur 3: das erste erfindungsgemäße Befestigungselement in einem verspreizten Zustand in einer perspektivischen Ansicht;
- Figur 4: ein zweites erfindungsgemäßes Befestigungselement in einem verspreizten Zustand in einer perspektivischen Ansicht;
- Figur 5: das erste Widerlager eines dritten erfindungsgemäßen Befestigungselements in einem unverspreizten Zustand in einer Schnittdarstellung;
- Figur 6: das dritte erfindungsgemäße Befestigungselement in einem verspreizten Zustand in einer perspektivischen Ansicht;
- Figur 7: ein viertes erfindungsgemäßes Befestigungselement in einem unverspreizten Zustand in einer Ansicht; und
- Figur 8: das zweite Widerlager des vierten erfindungsgemäßen Befestigungselements in einer perspektivischen Ansicht.

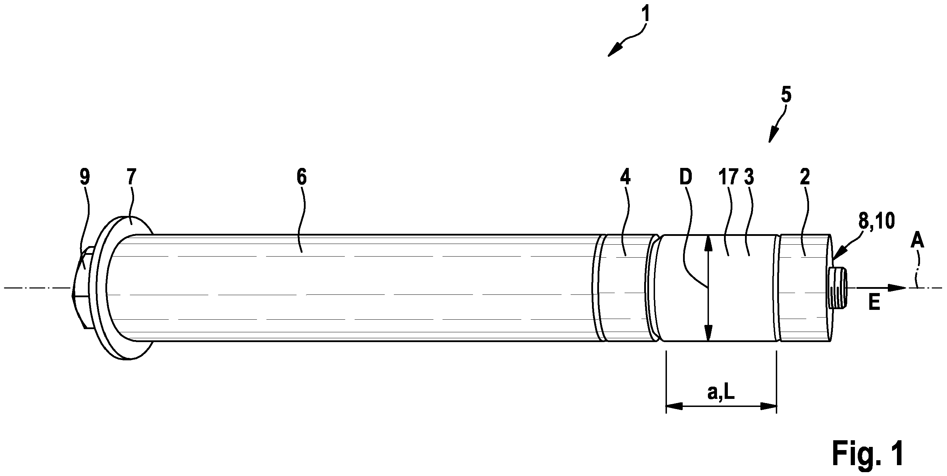

Die Figuren 1 bis 3 zeigen ein erfindungsgemäßes Befestigungselement 1. Das Befestigungselement 1 ist entlang seiner Längsachse A gestreckt und weist in Richtung der Einbringrichtung E vorne ein erstes Widerlager 2 auf, an das sich entgegen der Einbringrichtung E ein Spreizelement 3 und ein zweites Widerlager 4 anschließt. Das erste Widerlager 2, das Spreizelement 3 und das zweite Widerlager 4 bilden gemeinsam eine Spreizvorrichtung 5. An die Spreizvorrichtung 5 schließt sich entgegen der Einbringrichtung E eine Abstandshülse 6 sowie eine Unterlegscheibe 7 an. Das Befestigungselement 1 weist einen axialen, zentrischen Schraubkanal 8 für eine metrische Schraube 9 auf, die in ein Innengewinde 10 eingreift, das am ersten Widerlager 2 angeordnet ist. Die Schraube 9 liegt mit ihrem Kopf an der Unterlegscheibe 7 an, so dass das erste Widerlager 2, das Spreizelement 3, das zweite Widerlager 4, die Abstandshülse 6, die Unterlegscheibe 7 und die Schraube 9 gemeinsam eine Montageeinheit, das Befestigungselement 1, bilden.

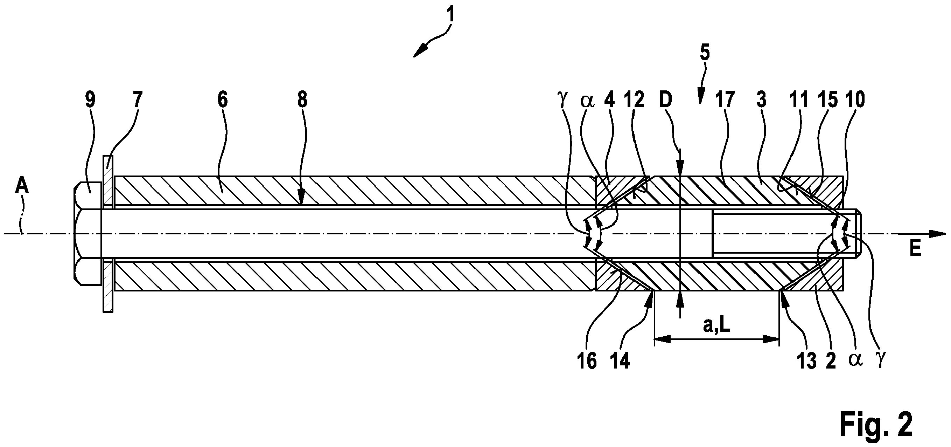

Das Spreizelement 3 ist aus einem gummiartigen Material hergestellt, also einem Material das sich relativ einfach durch Stauchen in Querrichtung dehnen lässt. In diesem Fall besteht das Spreizelement 3 aus Elastollan, einem im Spritzgussverfahren verarbeitbaren PU-Elastomer. Die Figuren 1 und 2 zeigen das Befestigungselement 1 in einem unverspreizten Zustand, in dem der Durchmesser D des Spreizelements 3 im Wesentlichen dem Durchmesser des ersten Widerlagers 2 beziehungsweise dem des zweiten Widerlagers 4 entspricht.

Um eine möglichst reproduzierbare, starke und stabile Aufweitung des Spreizelements 3 zu erhalten, weisen die beiden Widerlager 2, 4 je eine konische Widerlagerfläche 11, 12 für das Spreizelement 3 auf (siehe Figur 2). Die radiale Ausdehnung der Widerlagerflächen 11, 12 wird zum Spreizelement 3 hin größer und die Widerlagerflächen 11, 12 erstrecken sich im Wesentlichen bis zu spreizteilseitigen Enden 13, 14 und im Wesentlichen bis zum Umfang der Widerlager 2, 4. Das Spreizelement 3 weist an seinen beiden axialen Enden konisch verlaufende, kegelstumpfförmige Lagerflächen 15, 16 auf, die mit den Widerlagerflächen 11, 12 korrespondieren und vollflächig an diesen anliegen. Die Kegel, die die Widerlagerflächen 11, 12 bzw. die Lagerflächen 15, 16 umhüllen, weisen einen Öffnungswinkel α, γ von 60° auf. Zwischen den beiden Lagerflächen 15, 16 weist das Spreizelement 3 einen Stauchkörper 17 auf, der im Wesentlichen zylinderförmig ist, mit einer Länge L, die ungefähr dem 1,1-fachen Durchmesser D des Spreizelements 3 im unverspreizten Zustand entspricht.

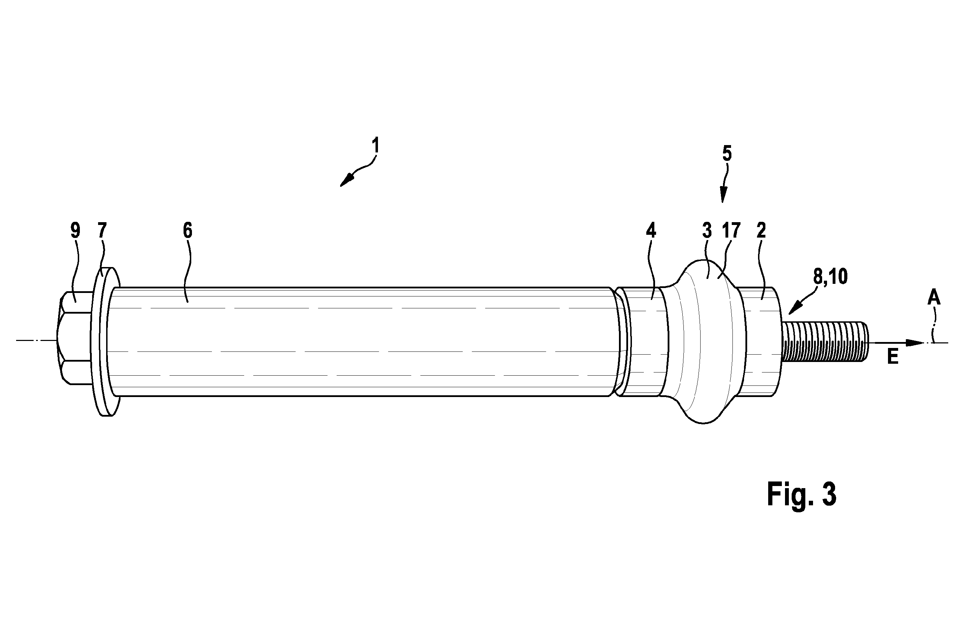

Wird das Befestigungselement 1 zum Befestigen eines nicht dargestellten Anbauteils an einem ebenfalls nicht dargestellten Verankerungsgrund verwendet, so wird zunächst durch das Anbauteil hindurch ein Bohrloch im Verankerungsgrund hergestellt, in das das Befestigungselement 1 eingebracht wird, bis die Unterlegscheibe 7 am Anbauteil anliegt. Zum Verspreizen des Befestigungselements 1 wird die Schraube 9 gedreht, so dass das erste Widerlager 2 über das Innengewinde 10 in Richtung des zweiten Widerlagers 4 bewegt wird. Das zweite Widerlager 4 ist über die Abstandshülse 6 gegen die Unterlegscheibe 7 abgestützt und gegenüber der Unterlegscheibe 7 in axialer Richtung unbeweglich gehalten. Somit verkürzt sich durch das Drehen der Schraube 9 der Abstand a zwischen dem ersten Widerlager 2 und dem zweiten Widerlager 4. Durch diese Relativverschiebung der beiden Widerlager 2, 4 wird auf das gummiartige Spreizelement 3 in Längsrichtung eine Druckkraft ausgeübt und das Spreizelement 3 gestaucht, wodurch es in Querrichtung, also in radialer Richtung normal zur Längsachse A des Befestigungselements 1 gedehnt wird, wie dies in Figur 3 dargestellt ist. Aufgrund der speziellen Ausgestaltung der Spreizvorrichtung 5 ist das Spreizelement 3 im aufgespreizten Zustand ringförmig bzw. birnenförmig gewölbt, in radialer Richtung um das 1,5- bis 2-fache geweitet und in axialer Richtung stark verkürzt. Durch die Dehnung in radialer Richtung wird das Spreizelement 3 in einem Bohrloch gegen die Bohrlochwand gedrückt, so dass zwischen dem Spreizelement 3 und der Bohrlochwand eine Reibungskraft wirkt, wodurch das Befestigungselement 1 im Verankerungsgrund verankert ist. Aufgrund der ausgeprägten Ring- bzw. Birnenform des verspreizten Spreizelements 3 werden mit dem erfindungsgemäßen Befestigungselement 1 reproduzierbar sehr hohe Haltekräfte im Verankerungsgrund erreicht.

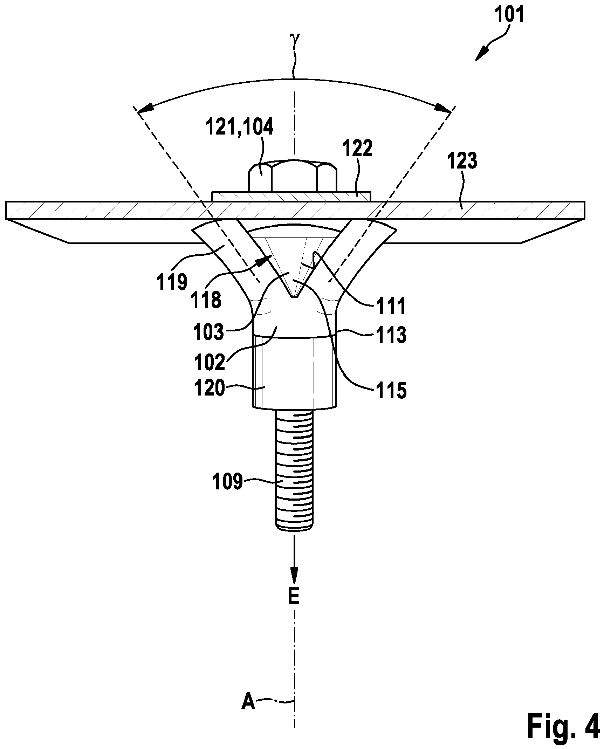

Die Figuren 4 bis 8 zeigen weitere Ausgestaltungen des erfindungsgemäßen Befestigungselements. Um Wiederholungen zu vermeiden, wird nachfolgend nur auf die Unterschiede zu dem in den Figuren 1 bis 3 dargestellten ersten Ausführungsbeispiel eingegangen.

In Figur 4 ist ein zweites erfindungsgemäßes Befestigungselement 101 dargestellt. Das Befestigungselement 101 besteht aus einer Schraube 109, einem ersten Widerlager 102, das aus einem festen Kunststoff hergestellt ist, einem Spreizelement 103 aus Elastollan und einer zylindrischen Hülse 120 aus Metall, die ein Innengewinde aufweist und mit dem ersten Widerlager 102 zusammenwirkt. Abweichend von dem in den Figuren 1 bis 3 dargestellten Befestigungselement 1 wirkt der Kopf 121 der Schraube 109 als zweites Widerlager 104. Figur 4 zeigt das Befestigungselement 101, mit dem ein Anbauteil 122 an einer als Verankerungsgrund wirkenden Platte 123 verankert ist. Das Befestigungselement 101 wurde durch ein in Figur 4 nicht sichtbares Bohrloch durch das Anbauteil 122 in die Platte 123 eingeführt und durch Drehen der Schraube 109 wurde das erste Widerlager 102 in axialer Richtung zum Kopf der Schraube 121, also zum zweiten Widerlager 104, bewegt, wodurch das gummiartige Spreizelement 103 gegen die Platte 123 gedrückt, gestaucht und radial gedehnt wurde. Das erste Widerlager 102 weist vier Schlitze 118 auf, die den die Widerlagerfläche 111 bildenden Teil des ersten Widerlagers 102 in vier Spreizsegmente 119 unterteilt, von denen in Figur 4 nur zwei sichtbar sind. Vor und beim axialen Stauchen des Spreizelements 103 werden die Spreizsegmente 119 in radialer Richtung gespreizt, wodurch auch die Widerlagerfläche 111 aufgespreizt und in radialer Richtung geweitet wird, so dass sie eine konische Fläche mit einem Öffnungswinkel γ von 60° bildet. Hierdurch wird die Widerlagerfläche 111, die das in Querrichtung gedehnte Spreizelement 103 abstützt, in radialer Richtung vergrößert, wodurch das Spreizelement 103 größere Kräfte aufnehmen kann. In diesem Fall liegen die Spreizsegmente 119 zudem direkt an der Platte 123 an. Die Spreizsegmente 119 übertragen ebenfalls Kräfte zwischen der Platte 123 und dem Befestigungselement 101. Das Befestigungselement 101 ist fest und stabil an der Platte 123 verankert. Beim Stauchen des Spreizelements 103 dringt das gummiartige Material des Spreizelements 103 in die Schlitze 118 ein, die als Verdrehsicherungselemente wirken, da das in die Schlitze 118 eingedrungene Material durch Formschluss eine Verdrehung des Widerlagers 102 gegenüber dem Spreizelement 103 verhindert. Da das Spreizelement 103 aus gummiartigem Material besteht und elastisch verformbar ist, können Unebenheiten der Platte, wie beispielsweise Stege eines Hohlprofils, ausgeglichen und umschlossen werden, ohne dass hierdurch die Haltekräfte beeinträchtigt werden.

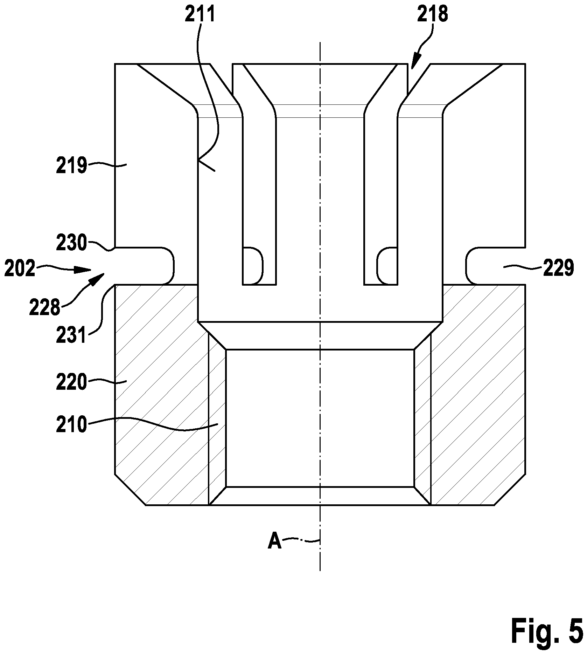

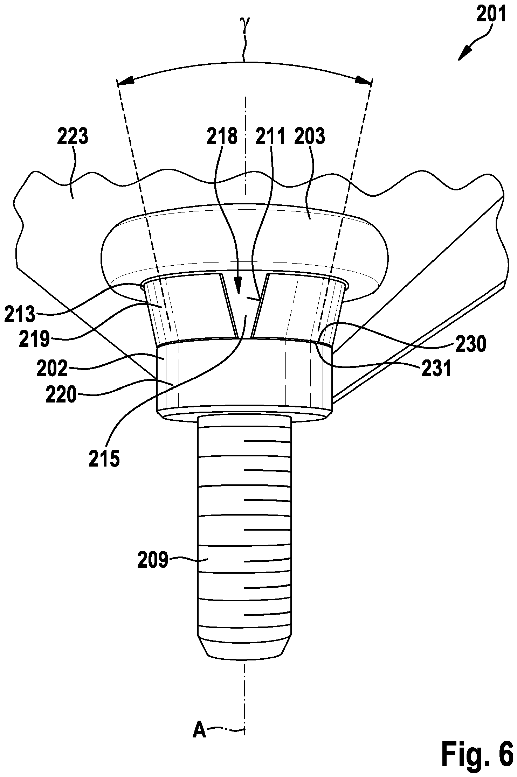

Figur 5 zeigt das erste Widerlager 202 eines weiteren Befestigungselements 201, wie es in Figur 6 dargestellt ist.. Abweichend zu dem in Figur 4 dargestellten Befestigungselement 101 ist in diesem Fall die Hülse 220 mit Innengewinde 210 in das erste Widerlager 202 integriert, wie dies schon bei dem Befestigungselement 1 der Figuren 1 bis 3 der Fall ist. Das erste Widerlager 202 ist aus Metall hergestellt und weist ebenfalls Schlitze 218 auf, die den die Widerlagerfläche 211 bildenden Teil des ersten Widerlagers 202 in Spreizsegmente 219 unterteilt, die eine Aufspreizung und Vergrößerung der Widerlagerfläche 211 in radialer Richtung ermöglichen und als Verdrehsicherungselemente wirken. In Figur 5 ist die Widerlagerfläche 211 noch nicht aufgespreizt. Die Spreizsegmente 219 sind im Vergleich zu dem in Figur 4 dargestellten Befestigungselement 101 im Verhältnis zum Durchmesser des ersten Widerlagers 202 relativ kurz, so dass die Spreizsegmente 219 im aufgespreizten Zustand in radialer Richtung nicht über das ringförmig gedehnte Spreizelement 203 überstehen, sondern nur die dem Spreizelement 203 in Querrichtung zur Verfügung stehende Widerlagerfläche 211 vergrößern (vgl. Figur 6).

Die Spreizsegmente 219 weisen eine in Umfangsrichtung verlaufende Nut 229 als Schwächung auf, so dass die Spreizsegmente 219 schon bei einer geringen axialen Druckkraft vor dem Stauchen des Spreizelements 203 aufspreizen. Durch die Nut 229 wird zudem ein Begrenzungselement 228 gebildet, da die dem Spreizelement 203 zugewandte Wand 230 der Nut 229 gegen die dem Spreizelement 203 abgewandte Wand 231 der Nut 229 stößt, wenn die Spreizsegmente 219 vollständig aufgespreizt sind und der Öffnungswinkel γ der Widerlagerfläche 60° beträgt.

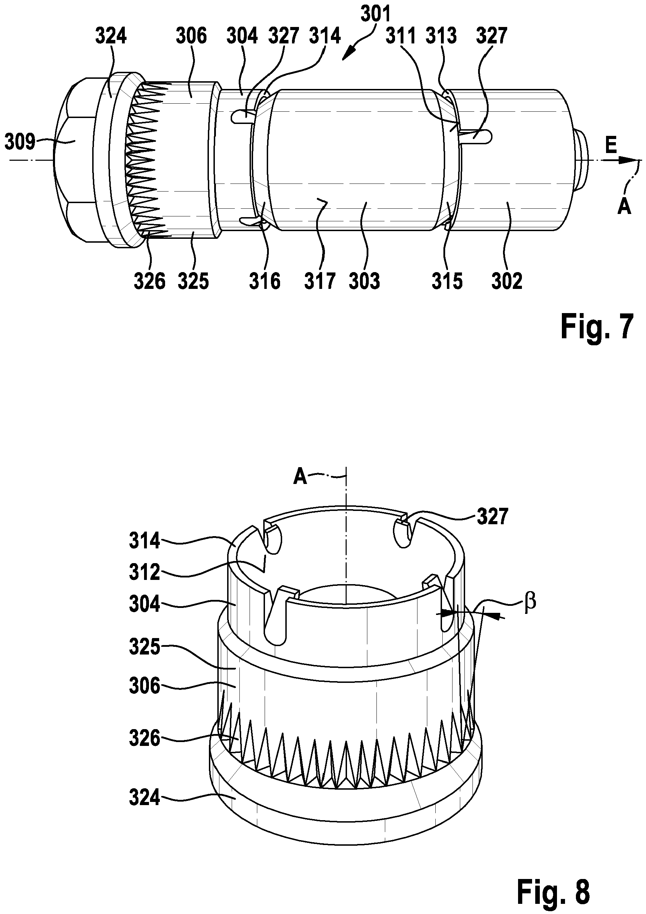

In Figur 6 ist ein weiteres erfindungsgemäßes Befestigungselement 301 dargestellt. Das Befestigungselement 301 ähnelt dem in den Figuren 1 bis 3 dargestellten Befestigungselement 1, wobei das zweite Widerlager 304 mit der Abstandshülse 306 verbunden ist und die Abstandshülse 306 an ihrem in Einbringrichtung E hinteren Ende einen umlaufenden Bund 324 aufweist, der als Anlagefläche für ein nicht dargestelltes Anbauteil dient. Am Übergang zwischen dem zylindrischen Schaft 325 und dem Bund 324 der Abstandshülse 306 sind mit einem Rändel eingeprägte keilförmige Rippen 326 als Mitdrehsicherung angeordnet. Die Abstandshülse 306 ist vergrößert in Figur 7 dargestellt. Die Höhe der Rippen 326 nimmt in Einbringrichtung E ab, da sie mit einem Neigungswinkel β von ungefähr 5° gegen die Längsachse A des Befestigungselements 301 geneigt sind. Zudem sind am ersten Widerlager 302 und am zweiten Widerlager 304 Verdrehsicherungselemente 327 angeordnet, die als Zähne über die Widerlagerflächen überstehen, wie es in Figur 7 für die Widerlagerfläche 312 des zweiten Widerlagers 304 zu sehen ist. Die Verdrehsicherungselemente 327 dringen in das gummiartige Material der konischen Lagerflächen 315, 316 des Spreizelements 303, zwischen denen sich der zylindrische Stauchkörper 317 befindet, ein und verhindern somit, dass das erste Widerlager 302, das Spreizelement 303 und die Abstandshülse 306 mit dem zweiten Widerlager 304 gegeneinander um die Längsachse des Befestigungselements 301 verdreht werden können. Hierdurch wird verhindert, dass beim Anziehen der in Figur 6 sichtbaren Schraube 309 das erste Widerlager 302 mit der Schraube 309 mitdreht und somit die beiden Widerlager 302, 304 nicht relativ aufeinander zu bewegt werden können.

### Bezugszeichenliste

### Befestigungselement

- 1, 101, 201, 301: Befestigungselement
- 2, 102, 202, 302: erstes Widerlager
- 3, 103, 203, 303: Spreizelement
- 4, 104, 204, 304: zweites Widerlager
- 5: Spreizvorrichtung
- 6, 306: Abstandshülse
- 7: Unterlegscheibe
- 8: Schraubkanal
- 9, 109, 209, 309: Schraube
- 10,210: Innengewinde
- 11, 111, 211, 311: Widerlagerfläche des ersten Widerlagers 2, 2'
- 12, 312: Widerlagerfläche des zweiten Widerlagers 4
- 13, 113, 213, 313: spreizteilseitiges Ende des ersten Widerlagers 2
- 14, 314: spreizteilseitiges Ende des zweiten Widerlagers 4
- 15, 115, 215, 315, 16, 316: konische Lagerflächen
- 17, 317: Stauchkörper
- 118,218: Schlitz
- 119,219: Spreizsegment
- 120,220: Hülse
- 121: Kopf der Schraube 109
- 122: Anbauteil
- 123, 223: Platte
- 324: Bund
- 325: Schaft
- 326: Rippe
- 327: Verdrehsicherungselement
- 228: Begrenzungselement
- 229: Nut
- 230: dem Spreizelement 203 zugewandte Wand der Nut 229
- 231: dem Spreizelement 203 abgewandte Wand der Nut 229
- α: Öffnungswinkel der konischen Lagerfläche 15, 115, 215, 315, 16, 316
- β: Neigungswinkel
- γ: Öffnungswinkel der Widerlagerflächen 11, 111, 211, 311, 12, 312
- A: Längsachse
- D: Durchmesser des Stauchkörpers 17
- L: Länge des Stauchkörpers 17
- E: Einbringrichtung

## Patentansprüche

1. Befestigungselement (1, 101, 201, 301)
- mit einem Spreizelement (3, 103, 203, 303) aus gummiartigem Material, das zwischen einem ersten Widerlager (2, 102, 202, 302) und einem zweiten Widerlager (4, 104, 204, 304) gelagert ist,
- wobei das erste Widerlager (2, 102, 202, 302) in Längsrichtung (A) einbringseitig vor dem zweiten Widerlager (4, 104, 204, 304) angeordnet ist, und
- wobei das Spreizelement (3, 103, 203, 303) durch eine Relativbewegung der beiden Widerlager (2, 102, 202, 302, 4, 104, 204, 304) derart stauchbar ist, dass das Spreizelement (3, 103, 203, 303) in Querrichtung gedehnt wird und das Befestigungselement (1, 101, 201, 301) in einem Bohrloch befestigbar ist,
**dadurch gekennzeichnet,**
- **dass** mindestens ein Widerlager (2, 102, 202, 302, 4, 304) eine konische Widerlagerfläche (11, 111 211, 311, 12, 312) für das Spreizelement (3, 103, 203, 303) aufweist,
- deren radiale Ausdehnung zum Spreizelement (3, 103, 203, 303) hin größer wird, und
- die sich im Wesentlichen bis zu einem spreizteilseitigen Ende (13, 113, 213, 313, 14, 314) des Widerlagers (2, 102, 202, 302, 4, 304) erstreckt.

2. Befestigungselement nach Anspruch 1, **dadurch gekennzeichnet, dass** sich die konische Widerlagerfläche (11, 111, 211, 311, 12, 312) im Wesentlichen bis zum Umfang des Widerlagers (2, 102, 202, 302, 4, 304) erstreckt.

3. Befestigungselement nach einem der Ansprüche 1 oder 2, **dadurch gekennzeichnet, dass** an mindestens einem Ende des Spreizelements (3, 103, 203, 303) eine konische Lagerfläche (15, 115, 215, 315, 16, 316) angeordnet ist.

4. Befestigungselement nach Anspruch 3, **dadurch gekennzeichnet, dass** die Lagerfläche (15, 115, 215, 315, 16, 316) mit der Widerlagerfläche (11, 111, 211, 311, 12, 312) korrespondiert und insbesondere im Wesentlichen vollflächig an dieser anliegt.

5. Befestigungselement nach Anspruch 3 oder 4, **dadurch gekennzeichnet, dass** die Lagerfläche (15, 115, 215, 315, 16, 316) kegel- oder kegelstumpfförmig ist, mit einem Öffnungswinkel (α) des Kegels von 40° bis 70°, insbesondere von 60°.

6. Befestigungselement nach einem der Ansprüche 1 bis 5, **dadurch gekennzeichnet, dass** das Spreizelement (3, 103, 203, 303) einen im Wesentlichen zylinderförmigen Stauchkörper (17, 317) aufweist.

7. Befestigungselement nach Anspruch 6, **dadurch gekennzeichnet, dass** das Verhältnis der axialen Länge (L) zum Durchmesser (D) des zylinderförmigen Stauchkörpers (3, 103, 203, 303) im Wesentlichen 0,75 bis 1,5, insbesondere 1,0 bis 1,25 beträgt.

8. Befestigungselement nach einem der Ansprüche 1 bis 7, **dadurch gekennzeichnet, dass** die beim Stauchen des Spreizelements (3, 103, 203, 303) an der Lagerfläche (15, 115, 215, 315, 16, 316) anliegende Widerlagerfläche (11, 111, 211, 311) des einen Widerlagers (2, 102, 202, 301) kegel- oder kegelstumpfförmig ist, mit einem Öffnungswinkel γ des Kegels von 40° bis 70°, vorzugsweise von 55° bis 65°, insbesondere von 60°.

9. Befestigungselement nach einem der Ansprüche 1 bis 8, **dadurch gekennzeichnet, dass** das mindestens eine Widerlager (102, 202) mindestens zwei Schlitze (118, 218) aufweist, die den die Widerlagerfläche (111, 211) bildenden Teil des einen Widerlagers (102, 202) in Spreizsegmente (119, 219) unterteilt, die eine Aufspreizung der Widerlagerfläche (111, 211) ermöglichen.

10. Befestigungselement nach Anspruch 9, **dadurch gekennzeichnet, dass** das eine Widerlager (202) derart gestaltet ist, dass die Widerlagerfläche (211) aufspreizt, bevor sich das Spreizelement (203) beim Stauchen verformt.

11. Befestigungselement nach einem der Ansprüche 1 bis 10, **dadurch gekennzeichnet, dass** an dem Befestigungselement (301) eine Mitdrehsicherung (326) angeordnet ist.

12. Befestigungselement nach einem der Ansprüche 1 bis 11, **dadurch gekennzeichnet, dass** an dem mindestens einen Widerlager (102, 202, 302, 304) ein Verdrehsicherungselement (118, 218, 327) angeordnet ist, das eine Verdrehung des Spreizelements (103, 203, 303) relativ zum Widerlager (102, 202, 302, 304) verhindert.
